# EUROPEAN PATENT APPLICATION

(11) **EP 4 831 125 A1**
(43) Date of publication of application: **28.10.2026**
(21) Application number: 26165839.7
(22) Date of filing: 18.03.2026
(51) Int. Cl.: C01B 33/023

(54) **POROUS SILICON ELECTRODE ACTIVE MATERIAL PARTICLE, METHOD FOR PRODUCING SAME, ELECTRODE MIXTURE, AND BATTERY**

(30) Priority: 24.04.2025 JP 2025072461
(71) Applicant: Toyota Jidosha Kabushiki Kaisha, Toyota-shi, Aichi-ken 471-8571 (JP)
(72) Inventor: SUGANUMA, Hikaru, TOYOTA-SHI, AICHI-KEN, 471-8571 (JP)
(74) Representative: Cabinet Beau de Loménie

(57) **Abstract**

The present disclosure provides a porous silicon electrode active material particle in which expansion and contraction are suppressed, a method for producing the same, an electrode mixture containing such a porous silicon electrode active material particle, and a battery (1) including such an electrode mixture. A porous silicon electrode active material particle of the present disclosure has a plurality of pores and pillars of a three-dimensional structure surrounding the plurality of pores. In the particle of the present disclosure, a ratio of the average pore diameter to the average pillar diameter is 8.0 or less. The method of the present disclosure for producing the porous silicon electrode active material particle includes the following steps: (a) reducing silica particles with magnesium at a temperature of 700°C or higher and 750°C or less to obtain precursor particles containing silicon and magnesium oxide; and (b) removing the magnesium oxide from the precursor particles.

## Description

### TECHNICAL FIELD

The present disclosure relates to a porous silicon electrode active material particle, a method for producing the same, an electrode mixture, and a battery.

### BACKGROUND

As disclosed in PTL 1, a battery containing porous silicon particles as a negative electrode active material is known.

### [CITATION LIST]

### [PATENT LITERATURE]

[PTL 1] Japanese Unexamined Patent Publication (Kokai) No. 2020-170605

### SUMMARY

### [TECHNICAL PROBLEM]

In batteries containing silicon as a negative electrode active material, the silicon may expand and contract during charging and discharging. This expansion and contraction of silicon can be absorbed by pores in the porous silicon particles, but there is room for further improvement in terms of suppressing such expansion and contraction.

Thus, an object of the present disclosure is to provide a porous silicon electrode active material particle in which expansion and contraction are suppressed, a method for producing the same, an electrode mixture containing such a porous silicon electrode active material particle, and a battery including such an electrode mixture.

The present inventors have found that this object can be achieved by the following means.
<Aspect 1>
   A porous silicon electrode active material particle,
   wherein the particle has a plurality of pores and pillars of a three-dimensional structure surrounding the plurality of pores, and
   wherein a ratio of the average pore diameter to the average pillar diameter is 8.0 or less.
<Aspect 2>
   The porous silicon electrode active material particle according to aspect 1, wherein the ratio is 2.0 or greater and 7.5 or less.
<Aspect 3>
   The porous silicon electrode active material particle according to aspect 2, wherein the ratio is 3.0 or greater and 6.5 or less.
<Aspect 4>
   The porous silicon electrode active material particle according to any one of aspects 1 to 3, wherein the average pore diameter is 20 nm or greater and 35 nm or less.
<Aspect 5>
   The porous silicon electrode active material particle according to any one of aspects 1 to 4, wherein the average pillar diameter is 1 nm or greater and 15 nm or less.
<Aspect 6>
   The porous silicon electrode active material particle according to any one of aspects 1 to 5, wherein a porosity based on a cross-sectional SEM image is 30 area% or greater and 55 area% or less.
<Aspect 7>
   An electrode mixture, including the porous silicon electrode active material particle according to any one of aspects 1 to 6.
<Aspect 8>
   A battery, including, in this order, a negative electrode active material layer, an electrolyte layer, and a positive electrode active material layer, and
   wherein the negative electrode active material layer contains the electrode mixture according to aspect 7.
<Aspect 9>
   The battery according to aspect 8,
   wherein the electrolyte layer contains a solid electrolyte, and the battery is a solid-state battery.
<Aspect 10>
   A method for producing the porous silicon electrode active material particle according to any one of aspects 1 to 6, the method including:
   (a) reducing silica particles with magnesium at a temperature of 700°C or higher and 750°C or less to obtain precursor particles containing silicon and magnesium oxide; and
   (b) removing the magnesium oxide from the precursor particles.
<Aspect 11>
   The method according to aspect 10, wherein in Step (a), the silica particles are reduced by the magnesium over a period of time of 10 hours or longer and 20 hours or less.
<Aspect 12>
   The method according to aspect 10 or 11, wherein in Step (b), the magnesium oxide is removed by treating the precursor particles with an acid.

### [ADVANTAGEOUS EFFECTS OF INVENTION]

According to the present disclosure, a porous silicon electrode active material particle in which expansion and contraction are suppressed, a method for producing the same, an electrode mixture containing such a porous silicon electrode active material particle, and a battery including such an electrode mixture can be provided.

### BRIEF DESCRIPTION OF DRAWINGS

FIG. 1 is a schematic cross-sectional view illustrating an example of a battery of the present disclosure.
FIG. 2 is an image based on a cross-sectional SEM image of an electrode active material layer containing the porous silicon electrode active material particle of Example 1, and in the image, the pore portions are indicated in white and the pillar portions are indicated in black.
FIG. 3 is a graph illustrating a relationship between a value of the (average pore diameter)/(average pillar diameter) and an amount of increase in restraint pressure of batteries of Examples 1 to 4 and Comparative Example 1.

### DESCRIPTION OF EMBODIMENTS

Hereinafter, embodiments of the present disclosure will be described in detail. However, it should be noted that the present disclosure is not limited to the following embodiments, and can be modified in various manners within the scope thereof.

### <<Porous Silicon Electrode Active Material Particle>>

A porous silicon electrode active material particle of the present disclosure has a plurality of pores and pillars of a three-dimensional structure surrounding the plurality of pores. In the porous silicon electrode active material particle of the present disclosure, a ratio of the average pore diameter to the average pillar diameter is 8.0 or less.

The present inventors have found that the porous silicon electrode active material particle having a plurality of pores and pillars of a three-dimensional structure surrounding the plurality of pores, and having a relatively small ratio of the average pore diameter to the average pillar diameter can suppress expansion and contraction of silicon during charging and discharging of a battery. The reason for this is not intended to be bound by any theory, but is presumed to be as follows. Specifically, for example, in a solid-state battery, pressing is sometimes carried out during molding of an electrode active material layer in order to achieve a more compacted electrode active material layer. The porous silicon electrode active material particle of the present disclosure is less likely to be plastically deformed by stress such as this type of pressing, and therefore, it is presumed that the pores of the porous silicon electrode active material particle are less likely to be crushed or collapsed. It is also presumed that as a result, the pores of the porous silicon electrode active material particle can thereby absorb the expansion and contraction of the pillars configured by silicon as a main component.

In the context of the present disclosure, "pillar" means a portion other than pores in the porous silicon electrode active material particle. The presence of the pillars and the pores can be confirmed by, for example, observing a cross section of the porous silicon electrode active material particle with a scanning electron microscope (SEM).

The "electrode active material" may be a "positive electrode active material" or a "negative electrode active material", and a "negative electrode active material" is particularly preferable.

Hereinafter, each element constituting the porous silicon electrode active material particle of the present disclosure will be described.

### <Pores>

The porous silicon electrode active material particle of the present disclosure have a plurality of pores. The pores can accommodate expansion and contraction of the silicon-containing pillars.

### Average Pore Diameter

The average pore diameter of the porous silicon electrode active material particle according to the present disclosure may be 10 nm or greater, 15 nm or greater, 20 nm or greater, 21 nm or greater, 22 nm or greater, 23 nm or greater, or 24 nm or greater, and may be 50 nm or less, 40 nm or less, 35 nm or less, 32 nm or less, 30 nm or less, 28 nm or less, 26 nm or less, or 25 nm or less. The average pore diameter may be 15 nm or greater and 40 nm or less, from 20 nm or greater and 35 nm or less, or 22 nm or greater and 32 nm or less. This allows the pores to effectively absorb the expansion and contraction of the pillars.

The method for measuring the average pore diameter is not particularly limited, and the average pore diameter can be measured, for example, as follows. Specifically, first, a cross-sectional SEM image is obtained for a cross section formed by processing a negative electrode active material layer by a cross-section polisher method. The acceleration voltage when acquiring the cross-sectional SEM image may be 2 kV. Next, the obtained cross-sectional SEM image is binarized through image processing using the image processing software Image-J (Ver. 1.52) and divided into black pillar portions and white pore portions. At this time, in the cross-sectional SEM image before image processing, the outermost layer is pores, but the second and subsequent layers are pillars, and therefore the portions illustrated in gray are made to appear as white pore portions. The average pore diameter can then be measured using a function of the Image-J software.

### Porosity

In the porous silicon electrode active material particle of the present disclosure, the porosity based on a cross-sectional SEM image may be 30 area% or greater, 35 area% or greater, 40 area% or greater, 45 area% or greater, or 50 area% or greater, and may be 57 area% or less, 56 area% or less, or 55 area% or less. This porosity may be 30 area% or greater and 55 area% or less, 35 area% or greater and 55 area% or less, or 40 area% or greater and 55 area% or less. This allows the pores to effectively absorb the expansion and contraction of the pillars.

The method for measuring the porosity is not particularly limited, and for example, the porosity can be calculated as a percentage of the area of the white portions in the image as obtained by image processing the cross-sectional SEM image using Image-J. The pillar ratio can be calculated as the "area of the entire image (100 area%) - porosity".

### Number of Pores

The number of pores is not particularly limited, as long as the average pore diameter and the porosity are within the above-described ranges.

### <Pillars>

The porous silicon electrode active material particle of the present disclosure have pillars of a three-dimensional structure surrounding a plurality of pores. Silicon contained in the pillars expands and contracts in association with charging and discharging of the battery. Such expansion and contraction can be absorbed by the above-described pores.

The pillars may or may not contain an element other than silicon, a compound, or the like. Examples of the compound and element other than silicon include lithium and magnesium oxide that remain without being removed when the porous silicon electrode active material particle is produced. The method for producing a porous silicon electrode active material particle will be described later in detail.

### Average Pillar Diameter

The average pillar diameter in the porous silicon electrode active material particle of the present disclosure may be 1 nm or greater, 3 nm or greater, or 4 nm or greater, and may be 15 nm or less, 13 nm or less, 10 nm or less, 9 nm or less, 8 nm or less, 7 nm or less, 6 nm or less, or 5 nm or less. The average pillar diameter may be 1 nm or greater and 15 nm or less, 3 nm or greater and 13 nm or less, or 4 nm or greater and 7 nm or less. This allows the pores to effectively absorb the expansion and contraction of the pillars.

The method for measuring the average pillar diameter is not particularly limited, and for example, the average pillar diameter can be calculated as a weighted average of the sizes of a plurality of spheres fitted inside a pillar by using the porous-body image analysis library PoreSpy (Ver. 2.4.1) of Python (trade name) to process the above-described image obtained by image processing a cross-sectional SEM image using the image processing software Image-J (Ver. 1.52).

### (Average Pore diameter)/(Average Pillar diameter)

In the porous silicon electrode active material particle of the present disclosure, a ratio of the average pore diameter to the average pillar diameter is 8.0 or less. This allows the pores to absorb the expansion and contraction of the pillars.

This ratio may be 1.5 or greater, 2.0 or greater, or 2.5 or greater, and may be 7.5 or less, or 7.0 or less. This ratio may also be 2.0 or greater and 7.5 or less. This allows the pores to effectively absorb the expansion and contraction of the pillars.

This ratio may be, in particular, 3.0 or greater, 3.5 or greater, 4.0 or greater, 4.5 or greater, 5.0 or greater, or 5.5 or greater, and may be 6.5 or less, or 6.0 or less. This ratio may also be 3.0 or greater and 6.5 or less. This allows the pores to effectively absorb the expansion and contraction of the pillars. While not intended to be bound by any theory, the reason for this is considered to be that the pore diameter is not overly small in relation to the pillar diameter, i.e., the pore diameter is an appropriate size, and thus the efficiency of absorption of the expansion and contraction of the pillars by the pores is improved.

In the porous silicon electrode active material particle of the present disclosure, the ratio of the (average pore diameter x porosity)/(average pillar diameter x pillar ratio) may be 2.0 or greater, 3.0 or greater, 4.0 or greater, 5.0 or greater, 6.0 or greater, or 6.5 or greater, and may be 10.0 or less, 9.0 or less, 8.5 or less, 8.0 or less, 7.5 or less, or 7.0 or less. This allows the pores to effectively absorb the expansion and contraction of the pillars.

### <<Method for Producing Porous Silicon Electrode Active Material Particle>>

The method of the present disclosure for producing the porous silicon electrode active material particle includes the following steps:
(a) reducing silica particles with magnesium at a temperature of 700°C or higher and 750°C or less to obtain precursor particles containing silicon and magnesium oxide; and
(b) removing the magnesium oxide from the precursor particles.

### <Preparation of Precursor Particles>

The method of the present disclosure includes (a) reducing silica particles with magnesium at a temperature of 700°C or higher and 750°C or less to obtain precursor particles containing silicon and magnesium oxide. Details such as the pore diameter, the pillar diameter, and the porosity can be adjusted by controlling the temperature during the reduction treatment in this manner.

In Step (a) of the method of the present disclosure, the silica particles may be reduced with magnesium over a period of 10 hours or longer and 20 hours or less. The pore diameter, the pillar diameter, the porosity, and the like can be adjusted by controlling the time of the reduction treatment in this manner.

The method for reducing the silica particles with magnesium is not particularly limited, and examples thereof include a method of bringing the silica particles into contact with a magnesium vapor. The method for generating the magnesium vapor is not particularly limited, and examples thereof include a method of heating a reducing agent serving as a magnesium source such as a magnesium alloy or metallic magnesium. Specific examples of the method for reducing the silica particles with magnesium include a method in which the silica particles and magnesium are heated in the same system at a temperature equal to or higher than the temperature at which magnesium vapor is generated.

The magnesium alloy is not particularly limited, and may be, for example, at least one selected from Mg₂Si, MgCa, MgCu₂, MgNi₂, and MgSn.

In the method of bringing the silica particles into contact with the magnesium vapor, the pressure at which the silica particles are reduced with magnesium is not particularly limited. The pressure may be, for example, less than 1 atm, 100 Pa or less, or 20 Pa or less. This pressure may be a Mg vapor pressure equal to or lower than the equilibrium pressure of the following reaction equation (1).
[Chem. 1]

Mg₂Si ⇄ 2Mg(g) + Si ··· (1)

### <Removal of Magnesium Oxide>

The method of the present disclosure includes (b) removing the magnesium oxide from the precursor particles. Through this, pores are formed in the portions where the magnesium oxide is removed from the precursor particles. In the method of the present disclosure, at least some of the magnesium oxide may be removed, or all of the magnesium oxide may be removed.

In the method of the present disclosure, in Step (b), the magnesium oxide may be removed by treating the precursor particles with an acid.

The acid is not particularly limited, and examples thereof include inorganic acids such as hydrochloric acid, nitric acid, and sulfuric acid.

The pH of the acid is not particularly limited, and may be, for example, 3 or lower, 2 or lower, or 1 or lower.

The molar ratio of the magnesium oxide to the acid is not particularly limited, and may be, for example, from 1:5 to 1:10.

Specifically, the magnesium oxide can be removed by the following procedures:
- prepare a prescribed amount of precursor particles and a prescribed amount of a 7 mass% hydrochloric acid solution in an environment having an oxygen concentration of 5% or less;
- introduce the precursor particles into a beaker containing the hydrochloric acid solution and stir the mixture at room temperature for 1 hour;
- insert the hydrochloric acid solution containing the precursor particles into a suction filtration bottle and filter the solution;
- wash the filtered powder with water;
- pour ethanol onto the washed powder and then rinse with water;
- transfer the filtered powder to a SUS petri dish;
- place the SUS petri dish in a laminated bag, close the zipper of the bag, and remove the bag from the environment having an oxygen concentration of 5% or less; and
- in an environment having an oxygen concentration of 5% or less and a dryer, use the dryer to dry at 120°C for 12 hours.

By controlling the acid treatment conditions during the removal of magnesium oxide, and in particular, by carrying out the acid treatment in an environment with an oxygen concentration of 5% or less in this manner, the pore diameter, the pillar diameter, the porosity, and the like can be adjusted.

The porous silicon electrode active material particle of the present disclosure may also be produced by a method other than the method described above. Examples of such a method include the following method. Specifically, first, mix silicon and metallic lithium to prepare LiSi precursor particles. Next, mix the LiSi precursor particles and a dispersion medium. React the obtained LiSi precursor particle dispersion with ethanol as a Li extraction solvent, and then further react with acetic acid. In this manner, Li is removed from the precursor particles, and thereby a porous silicon electrode active material particle in which pores are formed can be obtained.

### <<Electrode Mixture>>

The electrode mixture of the present disclosure contains the porous silicon electrode active material particle of the present disclosure. The electrode mixture may optionally include a solid electrolyte, a conductive additive, a binder, and the like.

In the present disclosure, the "electrode mixture" refers to a composition that can constitute an electrode active material layer as is or by further containing other components. In the present disclosure, the term "electrode mixture slurry" refers to a slurry that includes a dispersion medium in addition to the "electrode mixture" and can be applied and dried to form an electrode active material layer.

In the present disclosure, the "electrode mixture" may be a "positive electrode mixture" or a "negative electrode mixture", and is particularly preferably a "negative electrode mixture".

Hereinafter, each element constituting the electrode mixture of the present disclosure will be described.

### <Porous Silicon Electrode Active Material Particle>

Reference may be made to the above description regarding the porous silicon electrode active material particle.

The content of the porous silicon electrode active material particle in the electrode mixture is not particularly limited, and can be appropriately set in consideration of details such as the desired battery capacity.

### <Solid Electrolyte>

Examples of the solid electrolyte include inorganic solid electrolytes such as a sulfide solid electrolyte, an oxide solid electrolyte, a nitride solid electrolyte, and a halide solid electrolyte, and organic polymer electrolytes such as a polymer electrolyte. The solid electrolyte may be, in particular, a sulfide solid electrolyte.

For example, when the battery is a lithium-ion secondary battery, the solid electrolyte may have lithium ion conductivity.

Examples of the sulfide solid electrolyte having lithium ion conductivity include a solid electrolyte containing the element Li, an element X (X representing at least one of P, As, Sb, Si, Ge, Sn, B, Al, Ga, and In), and the element S. The sulfide solid electrolyte may further contain the element O and/or a halogen element. Examples of the halogen element include the element F, Cl, Br, and I.

Examples of the sulfide solid electrolyte include Li₂S-P₂S₅, Li₂S-P₂S₅-LiI, Li₂S-P₂S₅-GeS₂, Li₂S-P₂S₅-Li₂O, Li₂S-P₂S₅-Li₂O-LiI, Li₂S-P₂S₅-LiI-LiBr, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZmSn (where m and n are positive numbers; and Z represents any of Ge, Zn, or Ga), Li₂S-GeS₂, Li₂S-SiS₂-Li₃PO₄, and Li₂S-SiS₂-LiₓMO_{y} (where x and y are positive numbers; and M represents any of P, Si, Ge, B, Al, Ga, or In).

Examples of the oxide solid electrolyte having lithium ion conductivity include a solid electrolyte containing the element Li, an element Y (Y representing at least one of Nb, B, Al, Si, P, Ti, Zr, Mo, W, and S), and the element O. Specific examples thereof include garnet-type solid electrolytes such as Li₇La₃Zr₂O₁₂, Li₇₋ₓLa₃(Zr₂₋ₓNbₓ)O₁₂ (0 ≤ x ≤ 2), and Li₅La₃Nb₂O₁₂; perovskite-type solid electrolytes such as (Li,La)TiO₃, (Li,La)NbO₃, and (Li,Sr)(Ta,Zr)O₃; NaSICON-type solid electrolytes such as Li(Al,Ti)(PO₄)₃ and Li(Al,Ga)(PO₄)₃; Li-P-O-based solid electrolytes such as Li₃PO₄ and LIPON (a compound in which some of the O in Li₃PO₄ is substituted with N); and Li-B-O-based solid electrolytes such as Li₃BO₃ and a compound in which some of the O of Li₃BO₃ is substituted with C.

The content of the solid electrolyte in the electrode mixture is not particularly limited, and can be appropriately set in consideration of details such as the desired ionic conductivity.

### <Conductive Additive>

The conductive additive may be, for example, a carbon material, metal particles, or a combination thereof. The carbon material may be, for example, a non-fibrous carbon material such as acetylene black (AB) or Ketjenblack (KB); a fibrous carbon material such as vapor-grown carbon fibers (VGCF), carbon nanotubes (CNT), or carbon nanofibers (CNF); or a combination thereof. The metal particles may be, for example, nickel, copper, iron, stainless steel, or a combination thereof.

The content of the conductive additive in the electrode mixture is not particularly limited, and can be appropriately set in consideration of details such as the desired conductivity.

### <Binder>

The binder may be, for example, a rubber-based binder such as butadiene rubber, hydrogenated butadiene rubber, styrene butadiene rubber (SBR), hydrogenated styrene butadiene rubber, nitrile butadiene rubber, hydrogenated nitrile butadiene rubber, acrylate butadiene rubber (ABR), or ethylene propylene rubber; a fluoride-based binder such as polyvinylidene fluoride (PVdF), a polyvinylidene fluoride-polyhexafluoropropylene copolymer (PVdF-HFP), polytetrafluoroethylene, or fluororubber; a polyolefin-based thermoplastic resin such as polyethylene, polypropylene, or polystyrene; an imide-based resin such as polyimide or polyamide-imide; an amide-based resin such as polyamide; an acrylic-based resin such as polymethyl acrylate or polyethyl acrylate; a methacrylic-based resin such as polymethyl methacrylate or polyethyl methacrylate; or a combination thereof.

The content of the binder in the electrode mixture is not particularly limited and can be appropriately set in consideration of details such as the desired binding properties.

### <Other Components>

The electrode mixture may or may not further contain other components in addition to those described above.

### <<Battery>>

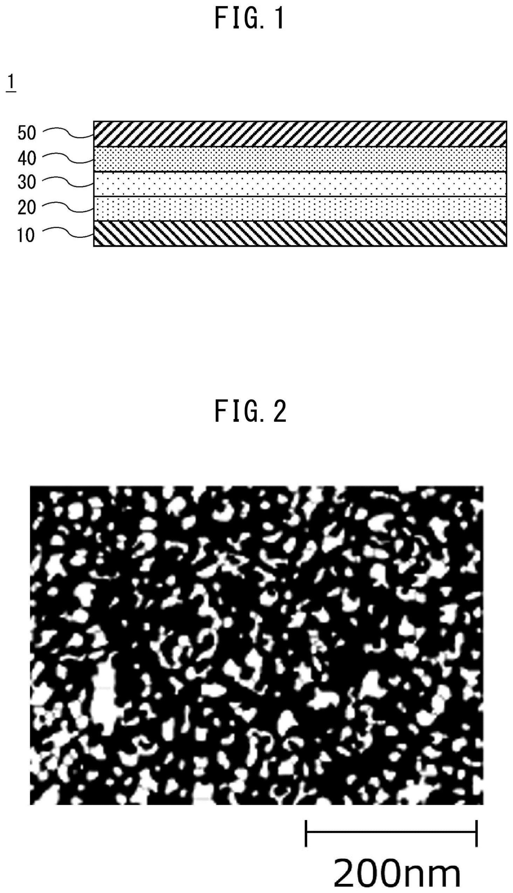

The battery of the present disclosure has a negative electrode active material layer, an electrolyte layer, and a positive electrode active material layer in this order, and the negative electrode active material layer includes the electrode mixture of the present disclosure. Specifically, in the battery of the present disclosure, the electrode mixture of the present disclosure is used as a negative electrode mixture. As illustrated in FIG. 1, a battery 1 of the present disclosure may include a negative electrode current collector layer 10, a negative electrode active material layer 20 including the electrode mixture of the present disclosure, an electrolyte layer 30, a positive electrode active material layer 40, and a positive electrode current collector layer 50 in this order.

The battery of the present disclosure may be a liquid-based battery or a solid-state battery, and is particularly preferably a solid-state battery. In the present disclosure, the term "solid-state battery" means a battery including at least a solid electrolyte as the electrolyte. Thus, the solid-state battery may include a combination of a solid electrolyte and a liquid electrolyte as the electrolyte. The solid-state battery may be an all-solid-state battery, i.e., a battery including only a solid electrolyte as the electrolyte.

The battery of the present disclosure may be a secondary battery, particularly a lithium-ion secondary battery.

The battery of the present disclosure may be restrained by a restraint member, such as an end plate, from both sides in the stacking direction of the layers. Examples of the restraint method include, but are not limited to, a method using the restraint torque of a bolt.

Hereinafter, each element constituting the battery of the present disclosure will be described. In particular, a case wherein the battery of the present disclosure is an all-solid-state battery will be described below as an example.

### <Negative Electrode Current Collector Layer>

The negative electrode current collector layer may be in the form of a foil, a plate, a mesh, a perforated metal, a foam, or the like. The negative electrode current collector layer may be a metal foil, a metal mesh, or a carbon sheet, and is particularly preferably a metal foil. The negative electrode current collector layer may be made of a plurality of foils, sheets, or the like.

The metal constituting the negative electrode current collector layer is not particularly limited, and may be, for example, copper, nickel, chromium, gold, platinum, silver, aluminum, iron, titanium, zinc, cobalt, stainless steel, or the like. In particular, the negative electrode current collector layer may contain at least one metal selected from copper, nickel, and stainless steel.

For the purpose of adjusting the resistance, a coating layer of some kind may be formed on the surface of the negative electrode current collector layer. The negative electrode current collector layer may be a metal foil or a substrate on which the above metal is plated or vapor-deposited. In addition, when the negative electrode current collector layer is composed of a plurality of metal foils, some type of layer may be provided between the plurality of metal foils.

The thickness of the negative electrode current collector layer is not particularly limited, and may be, for example, 0.1 µm or greater, or 1 µm or greater, and may be 1 mm or less, or 100 µm or less.

### <Negative Electrode Active Material Layer>

The negative electrode active material layer includes the electrode mixture of the present disclosure. Reference may be made to the above description regarding the electrode mixture of the present disclosure. The negative electrode active material layer may be formed by shaping the electrode mixture of the present disclosure itself into a layer.

The thickness of the negative electrode active material layer is not particularly limited, and may be, for example, 0.1 µm or greater and 1000 µm or less.

### <Solid Electrolyte Layer>

The solid electrolyte layer includes at least solid electrolyte particles and may optionally further include a binder and the like.

Reference may be made to the above description regarding the solid electrolyte particles and binder.

The thickness of the solid electrolyte layer is not particularly limited, and may be, for example, 0.1 µm or greater and 1000 µm or less.

### <Positive Electrode Active Material Layer>

The positive electrode active material layer includes at least a positive electrode active material, and may optionally further include a solid electrolyte, a conductive additive, a binder, and the like.

The positive electrode active material is not particularly limited, and may be, for example, an oxide active material. The oxide active material used in the lithium-ion battery may be, for example, LiCoO₂, LiMnO₂, Li₂NiMn₃O₈, LiVO₂, LiCrO₂, LiFePO₄, LiCoPO₄, LiNiO₂, or LiNi_{1/3}Co_{1/3}Mn_{1/3}O₂. A coating layer containing a Li-ion conductive oxide such as LiNbO₃ may be formed on the surface of the active material.

The content of the positive electrode active material in the positive electrode active material layer is not particularly limited.

Reference may be made to the above description regarding the solid electrolyte, conductive additive, and binder.

The thickness of the positive electrode active material layer is not particularly limited, and may be, for example, 0.1 µm or greater and 1000 µm or less.

### <Positive Electrode Current Collector Layer>

The positive electrode current collector layer may be in the form of a foil, a plate, a mesh, a perforated metal, a foam, or the like. The positive electrode current collector layer may be a metal foil or a metal mesh, and is particularly preferably a metal foil. The positive electrode current collector layer may be made of a plurality of foils.

The metal constituting the positive electrode current collector layer may be copper, nickel, chromium, gold, platinum, silver, aluminum, iron, titanium, zinc, cobalt, stainless steel, or the like, and in particular, the positive electrode current collector layer may contain aluminum.

For the purpose of adjusting the resistance, a coating layer of some kind may be formed on the surface of the positive electrode current collector layer. The positive electrode current collector layer may be a metal foil or a substrate on which the metal is plated or vapor-deposited. In addition, when the positive electrode current collector layer is composed of a plurality of metal foils, some sort of layer may be provided between the plurality of metal foils.

The thickness of the positive electrode current collector layer is not particularly limited, and may be, for example, 0.1 µm or greater, or 1 µm or greater, and may be 1 mm or less, or 100 µm or less.

### <Other Configurations>

The battery may be one in which each of the above-described constituent elements is housed inside an outer package. As the outer package, any known outer package of a battery can be adopted. A plurality of batteries may be electrically connected to each other as desired, or may be stacked on each other as desired to form a battery pack. In this case, the battery pack may be housed in a known battery case. The battery may further have an obvious configuration such as a necessary terminal. The shape of the battery may be, for example, a coin shape, a laminate (pouch) shape, a cylindrical shape, a square shape, or the like.

The method for producing the battery of the present disclosure is not particularly limited, and includes, for example, forming a negative electrode active material layer containing the electrode mixture of the present disclosure.

Examples of the method of forming the negative electrode active material layer containing the electrode mixture include a method of mixing constituent materials such as a porous silicon electrode active material particle to obtain an electrode mixture, and then subjecting the obtained electrode mixture to dry molding or wet molding.

The method for producing a battery of the present disclosure may further include forming an electrode laminate by laminating a negative electrode current collector layer, a negative electrode active material layer, a solid electrolyte layer, a positive electrode active material layer, and a positive electrode current collector layer in this order.

Other members such as a terminal are attached to the electrode laminate, if necessary. The electrode laminate is housed in a battery case and sealed to obtain a battery.

### EXAMPLES

### <<Example 1>>

### <Preparation of Porous Silicon Electrode Active Material Particle>

### Preparation of Precursor Particles

As raw materials, silica particles and magnesium (Mg) were fired in the same system at 700°C for 10 hours. As a result, the silica particles were reduced by the Mg, and precursor particles containing silicon (Si) and magnesium oxide (MgO) were obtained.

### Removal of Magnesium Oxide

The precursor particles were treated with hydrochloric acid having a pH of 1, and thereby the MgO was dissolved and removed from the precursor particles. Specifically, the MgO was removed by the following procedures:
- in an environment having an oxygen concentration of 5% or less, 1 g of the precursor particles and 75.64 mL of a 7 mass% hydrochloric acid solution were prepared;
- the precursor particles were inserted into a beaker containing the hydrochloric acid solution, and the mixture was stirred at room temperature for 1 hour;
- the hydrochloric acid solution containing the precursor particles was inserted into a suction filtration bottle and filtered;
- the filtered powder was washed with water;
- ethanol was poured over the washed powder, and the powder was rinsed with water;
- the filtered powder was transferred to a SUS petri dish;
- the SUS petri dish was placed in a laminated bag, the zipper of the bag was closed, and the bag was removed from the environment having an oxygen concentration of 5% or less; and
- in an environment having an oxygen concentration of 5% or less and a dryer, the dryer was used to dry the SUS petri dish at 120°C for 12 hours.

Through these procedures, pores were formed in the Si, and a porous silicon electrode active material particle was obtained. The molar ratio of MgO to hydrochloric acid was 1:10.

### <Production of Negative Electrode Active Material Layer>

The porous silicon electrode active material particle as a negative electrode active material and a sulfide solid electrolyte (volume ratio 100:80) were added to a dispersion medium, and these were mixed with an ultrasonic homogenizer to obtain a negative electrode mixture slurry. The obtained slurry was applied onto a copper foil as a negative electrode current collector layer by blade coating, and the dispersion medium was dried and removed to obtain a coating film. The coating film was compacted by pressing to obtain a negative electrode laminate in which the negative electrode active material layer was formed on the negative electrode current collector layer.

### <Calculation of Average Pore diameter and Average Pillar diameter>

A cross-sectional SEM image was acquired of a cross section formed by processing the negative electrode active material layer using a cross-section polisher method. The acceleration voltage at the time of acquiring the cross-sectional SEM image was 2 kV.

The obtained cross-sectional SEM image was binarized through image processing using the image processing software Image-J (Ver. 1.52) and divided into black pillar portions and white pore portions. At this time, in the cross-sectional SEM image before image processing, the outermost layer was pores, but the second and subsequent layers were pillars, and therefore the portions illustrated in gray were made to appear as white pore portions. The image thus obtained is presented in FIG. 2. The average pore diameter was measured using a function of the Image-J software, and the porosity was calculated as the proportion of the white portions in the image processed by the Image-J software. The weighted average of the sizes of a plurality of spheres fitted inside pillars using the porous-body image analysis library PoreSpy (Ver. 2.4.1) of Python (trade name) to process the above-described image obtained by image processing using the software Image-J was calculated and used as the average pillar diameter.

### <Production of Positive Electrode Active Material Layer>

A material obtained by surface-treating LiNi_{1/3}Co_{1/3}Mn_{1/3}O₂ as a positive electrode active material with lithium niobate (LiNbO₃), a sulfide solid electrolyte, VGCF (available from Resonac Corporation) as a conductive additive, and PVdF (available from Kureha Corporation) as a binder (volume ratio: 100:25:6:3) were added to a dispersion medium, and these were mixed with an ultrasonic homogenizer to obtain a positive electrode mixture slurry. The obtained slurry was applied onto an aluminum foil as a positive electrode current collector layer by blade coating, and the dispersion medium was removed by drying. As a result, a positive electrode laminate in which a positive electrode active material layer was formed on a positive electrode current collector layer was obtained.

### <Production of Solid Electrolyte Layer>

100 mg of the solid electrolyte was placed in a 1 cm² cylinder made of Macor and then pressed at a pressure of 100 MPa to prepare a solid electrolyte layer.

### <Production of Battery>

The negative electrode laminate was disposed with the negative electrode active material layer facing one of the surfaces of the solid electrolyte layer, and then pressed at a pressure of 100 MPa. Further, the positive electrode laminate was disposed with the positive electrode active material layer facing the other side of the solid electrolyte layer, and then pressed at a pressure of 500 MPa. Thereby, an all-solid-state battery of Example 1 was obtained.

### <Measurement of Amount of Increase in Restraint Pressure>

The obtained battery was charged to 4.55 V at a constant current of 0.245 mA and a constant voltage, and then discharged to 3.0 V at a constant current of 0.245 mA and a constant voltage. During this charging and discharging, the restraint pressure (MPa/mAh) of the battery was measured. The initial restraint pressure was subtracted from the restraint pressure at 4.55 V to determine the amount of increase in the restraint pressure. The amount of increase in the restraint pressure means the amount of expansion of the porous silicon electrode active material particle, and a smaller value indicates a better result.

### <<Examples 2 to 4 and Comparative Example 1>>

All-solid-state batteries of Examples 2 to 4 and Comparative Example 1 were obtained and evaluated in the same manner as in Example 1 with the exception that the temperature and time during the reduction treatment were changed as indicated in Table 1.

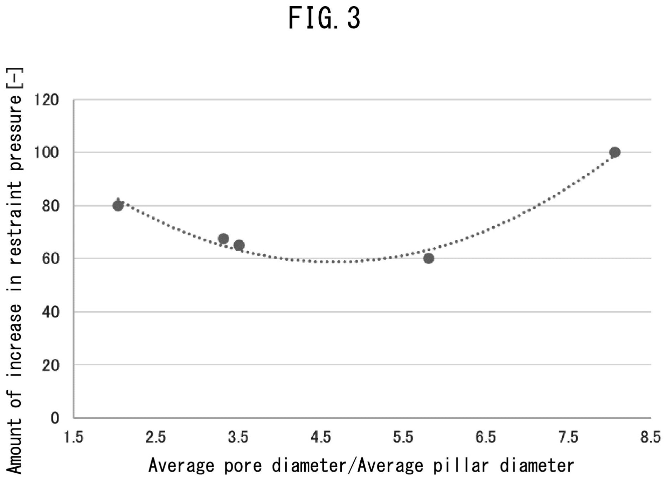

The evaluation results of each example are presented in Table 1 and FIG. 3. In Table 1 and FIG. 3, the amount of increase in the restraint pressure of Comparative Example 1 was defined as 100, and the amount of increase in the restraint pressure of each of the other examples was described as a relative value thereto. In Table 1, the terms "Pore Diameter" and "Pillar Diameter" mean the "average pore diameter" and the "average pillar diameter", respectively.

[Table 1]

**Table 1**

| | Reduction Conditions | | Physical Properties of Porous Si Particles | | | | Evaluation Results |
|---|---|---|---|---|---|---|---|
| | Temperature [°C] | Time [h] | Pore Diameter [nm] | Pillar Diameter [nm] | Pore Diameter / Pillar Diameter | Porosity [Area%] | Restraint Pressure Increase Amount [-] |
| Comparative Example 1 | 850 | 10 | 160.3 | 19.9 | 8.1 | 57.1 | 100 |
| Example 1 | 700 | 10 | 24.4 | 4.2 | 5.8 | 53.2 | 60 |
| Example 2 | 750 | 10 | 30.9 | 8.8 | 3.5 | 48.5 | 65 |
| Example 3 | 700 | 20 | 22.6 | 6.8 | 3.3 | 41.2 | 68 |
| Example 4 | 650 | 10 | 25.5 | 12.5 | 2.0 | 34.6 | 80 |

As indicated in Table 1 and FIG. 3, in the batteries of the Examples containing the porous silicon electrode active material particle in which the ratio of the average pore diameter to the average pillar diameter was 8.0 or less, the amount of increase in the restraint pressure was small.

### REFERENCE SIGNS LIST

- 1: Battery
- 10: Negative electrode current collector layer
- 20: Negative electrode active material layer
- 30: Electrolyte layer
- 40: Positive electrode active material layer
- 50: Positive electrode current collector layer

## Claims

1. A porous silicon electrode active material particle,
wherein the particle has a plurality of pores and pillars of a three-dimensional structure surrounding the plurality of pores, and
wherein a ratio of the average pore diameter to the average pillar diameter is 8.0 or less.

2. The porous silicon electrode active material particle according to claim 1, wherein the ratio is 2.0 or greater and 7.5 or less.

3. The porous silicon electrode active material particle according to claim 2, wherein the ratio is 3.0 or greater and 6.5 or less.

4. The porous silicon electrode active material particle according to any one of claims 1 to 3, wherein the average pore diameter is 20 nm or greater and 35 nm or less.

5. The porous silicon electrode active material particle according to any one of claims 1 to 4, wherein the average pillar diameter is 1 nm or greater and 15 nm or less.

6. The porous silicon electrode active material particle according to any one of claims 1 to 5, wherein a porosity based on a cross-sectional SEM image is 30 area% or greater and 55 area% or less.

7. An electrode mixture, including the porous silicon electrode active material particle according to any one of claims 1 to 6.

8. A battery (1), including, in this order, a negative electrode active material layer (20), an electrolyte layer (30), and a positive electrode active material layer (40), and
wherein the negative electrode active material layer (20) contains the electrode mixture according to claim 7.

9. The battery (1) according to claim 8,
wherein the electrolyte layer (30) contains a solid electrolyte, and the battery (1) is a solid-state battery.

10. A method for producing the porous silicon electrode active material particle according to any one of claims 1 to 6, the method including:
(a) reducing silica particles with magnesium at a temperature of 700°C or higher and 750°C or less to obtain precursor particles containing silicon and magnesium oxide; and
(b) removing the magnesium oxide from the precursor particles.

11. The method according to claim 10, wherein in Step (a), the silica particles are reduced by the magnesium over a period of time of 10 hours or longer and 20 hours or less.

12. The method according to claim 10 or 11, wherein in Step (b), the magnesium oxide is removed by treating the precursor particles with an acid.
